# EUROPEAN PATENT APPLICATION

(11) **EP 2 570 887 A2**
(43) Date of publication of application: **20.03.2013**
(21) Application number: 12180742.4
(22) Date of filing: 16.08.2012
(51) Int. Cl.: G06F 1/32

(54) **Power management system and method**

(30) Priority: 17.08.2011 TW 100129327
(71) Applicant: Askey Technology (Jiangsu) Ltd., Economic-Technological Development Area Wujiang Jiangsu (CN); Askey Computer Corp., New Taipei City 235, Taiwan (CN)
(72) Inventor: Lin, Lantion, 234 New Taipei City, Taiwan (TW); Hsieh, Ching-Feng, 108 Taipei City, Taiwan (TW)
(74) Representative: Sgobba, Marco

(57) **Abstract**

A power management system applicable to regulating a power supplied to an electronic device having a plurality of electronic elements includes a detection module that detects execution modes of the electronic elements and generate detection data, an analysis module that analyzes the detection data to generate process commands corresponding to the execution modes of the electronic elements, and a process module that gradually regulates the power via a power control mode of the electronic device according to the process commands, the power control mode including a light power supply, a sleep power supply and a turn-off power supply A power management method is also provided for regulating a power supplied to an electronic device having a plurality of electronic elements gradually.

## Description

### BACKGROUND OF THE APPLICATION

### 1. Field of the Application

The application relates to power management systems and methods, and, in particular, to a power management system and method for sequentially managing the power of electronic elements depending on their execution modes. 2. Background

As computer technology develops, enabling such as computer, laptop, tablet computer and smart phone to popularize, wherein portable electronic device has small volume and is conveniently portable, "everyone with a mobile phone" can be seen everywhere, and it can also be explained that portable electronic device is deeply into daily life of people.

Due to the increment of requirement of function, manufacturers renew portable electronic device continuously, and however, power consumption increases as the function increases, for example, increment of function may need additional IC element, and those IC element consumes power under execution mode while under non-execution mode before waiting step may also consumes power. Moreover, external power source is not available for using portable electronic device outdoors, so reducing power consumption becomes very important. Thus, most of current electronic device provides function of standby, and usually system directly enters standby mode when the idling time reach the predetermined value, although this would reduce power consumption, electronic device continuously consumes power before entering standby mode, this way, neither power consumption is reduced nor power supply reaches maximum efficacy.

Thus, how to provide a efficient mechanism for managing power, especially for reducing power consumption immediately when electronic device is idling, and prevent power consumption before entering standby mode as current electronic device, to achieve progressive power management, is the topic supposed to be faced by technician in this field.

### SUMMARY OF THE APPLICATION

In view of the above-mentioned problems of the prior art, the present invention provides a power management system and a power management method, in which execution modes of electronic elements in an electronic device are detected, and any electronic element, if not in operation, will be powered off, so as to achieve a goal of power saving.

To achieve the purpose and other purposes, the present invention provides a power management system applicable to regulating a power supplied to an electronic device having a plurality of electronic elements, the power management system comprising: a detection module detecting execution modes of the electronic elements and generating detection data; an analysis module analyzing the detection data to generate process commands corresponding to the execution modes of the electronic elements; and a process module gradually regulating the power by a power control mode of the electronic device according to the process commands, the power control mode including a light power supply, a sleep power supply and a turn-off power supply.

In an embodiment, the light power supply includes a first stage power supply and a second stage power supply, wherein the first stage power supply turns off power of a monitor, reduces power supplied to the peripheral elements and freezes a waiting process in the electronic device that executes software, and the second stage power supply regulates power of an IC element.

In an embodiment, the sleep power supply reduces clocking of an IC element, or turns off power of the IC element.

In an embodiment, the power control mode regulates to the sleep power supply and then to the turn-off power supply after a predetermined time.

The present invention further provides a power management method applicable to regulating a power supplied to an electronic device including a plurality of electronic elements, the power management method comprising the following steps of (1) keeping detecting execution modes of the electronic elements, (2) analyzing the execution modes and generating corresponding process commands, and (3) execute the process commands to gradually regulate a power control mode of the electronic device, the power control mode including a light power supply, a sleep power supply and a turn-off power supply.

Compared to prior art, the present invention provides a power management system and a power management method that detect execution modes of electronic elements including peripheral elements and/or IC elements, and enable the electronic element to gradually enter different power control modes under un-use of some of the electronic elements to reduce or close the power of un-used peripheral elements and/or IC elements. In this way, not only the disadvantage of saving power only feasible for electronic device under standby mode or sleep mode, also achieving result of saving power to prolong using time of power and manage power, especially advantageous to power use of electronic device such as tablet computer, laptop or smart phone.

### BRIEF DESCRIPTION OF DRAWINGS

FIG. 1 is a functional block diagram of a power management system of an embodiment according to the present invention;
FIG. 2 is a flow chart of a power management method of an embodiment according to the present invention; and
FIG. 3 is an operational flow chart illustrating a power control mode of a power management system of an embodiment according to the present invention.

### DETAILED DESCRIPTION OF PREFERRED EMBODIMENTS

The following illustrative embodiments are provided to illustrate the disclosure of the present invention, these and other advantages and effects can be apparently understood by those in the art after reading the disclosure of this specification. The present invention can also be performed or applied by other different embodiments. The details of the specification may be on the basis of different points and applications, and numerous modifications and variations can be devised without departing from the spirit of the present invention.

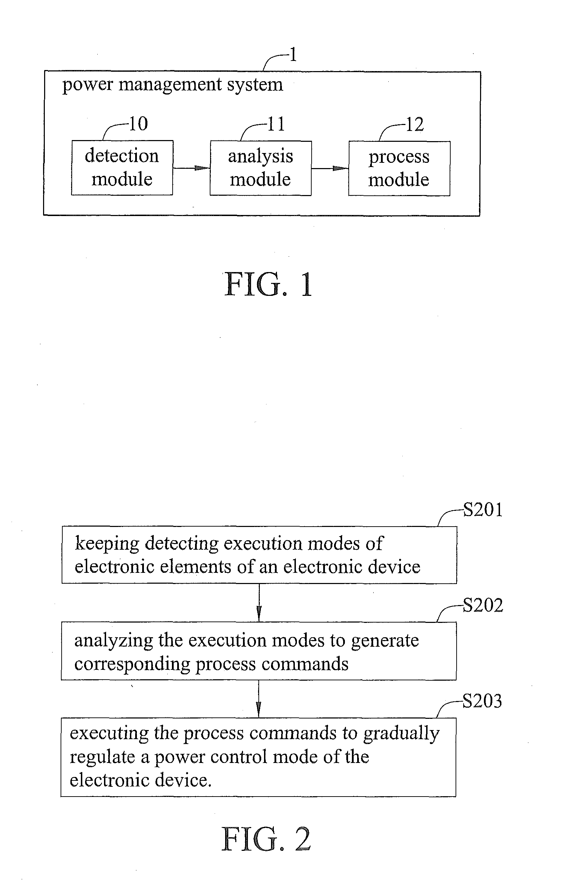

FIG. 1 is a function block diagram of a power management system 1 of an embodiment according to the present invention. The power management system 1 regulates power of a electronic device with a battery as a power source. The electronic device includes a plurality of electronic elements. Although the electronic device has a mechanism for saving power such as standby mode or sleep mode, the power management system 1 can immediately regulate power under un-use of electronic elements of electronic device rather than certain condition or an elapse of predetermined time. The power management system 1 includes a detection module 10, an analysis module 11, and a process module 12.

The detection module 10 detects the execution modes of the electronic elements, and generates detection data. To save power in shortest time, the detection module 10 would detect the execution mode of each of the electronic elements, generate corresponding detection data under un-use of electronic element, and transmit the detection data to the analysis module 11 for power regulation.

The analysis module 11 analyzes the detection data to obtain process commands corresponding to the execution modes of the electronic elements. The analysis module 11 specializes on the analysis of the execution modes of the electronic elements detected by the detection module 10 to generate the process commands corresponding to various kinds of modes. The process commands corresponding to various kinds of modes described herein refer to those enabling the electronic device to enter different power control modes under different time or power supply modes. Thus, the analysis module 11 can generate corresponding process commands based on the detected execution modes.

The process module 12 regulates the electronic device based on the process commands, to enable the electronic device to gradually enter the corresponding power control modes. In an embodiment, the power control modes includes a light power supply, a sleep power supply and a turn-off power supply. The detection module 10 keeps detecting the electronic elements after the electronic device enters one of the power control modes, entering next power control mode if necessary. The process module 12 regulates the power of the electronic device based on the process commands. The power management system 1 has different power control modes, including the light power supply, the sleep power supply, and the turn-off power supply. The light power supply can be divided into a first stage power supply and a second stage power supply, and the electronic device can gradually enter different power control modes such as the light power supply or the turn-off power supply, to achieve immediate and efficient power control.

The power control modes are set with predetermined power supply data of the electronic elements, and the process module 12 regulates the power of the electronic elements based on the power supply data. The electronic elements include a monitor, an IC element and/or a peripheral element. The IC element refers to an internal element of the electronic device, such as a general CPU and an audio amplifier, and the peripheral element refers to a peripheral apparatus such as a camera or an SD card.

The present invention utilizes immediate detection of execution modes of electronic elements to conduct immediate, corresponding power control, and reduces or turns off power of the electronic elements, to avoid saving power only in sleep or standby mode in prior art, and is more power-efficient than current electronic device.

In accordance with the power management system 1 shown in FIG. 1, FIG. 2 shows a flow chart of a power management method of an embodiment according to the present invention. The method starts in step S201. In step S201, execution modes of electronic elements are detected all the time. Whether entering power control mechanism or not is determined through the execution modes of the electronic elements in the electronic device, wherein the electronic device is continuously detected for enabling the electronic device to save power immediately. The method then proceeds to step S202.

In step S202, the execution modes are analyzed to generate corresponding process commands. In step S202, follow-up process commands are generated based on the detected execution modes of the electronic elements, that is, providing power control modes corresponding to different timing and mode. Of course, if the electronic device is in operation, no power control is needed, or the electronic device is enabled to enter a suitable power control mode under un-use of electronic element to regulate power of electronic element. The method then proceed to step S203.

In step S203, the process commands are executed and the power control modes of the electronic device are gradually regulated. The electronic device sequentially includes a light power supply, a sleep power supply, and a turn-off power supply. In step S203, the power control mode can be one of them, continuously detecting the electronic element, entering next power control mode if the condition is satisfied. That is, the electronic device enters different power control modes based on the process commands generated in step S202, wherein the power control modes are the light power supply, the sleep power supply, and the turn-off power supply. It is preferable that the light power supply sequentially includes a first stage power supply and a second stage power supply, each power control mode reducing or turning off power of different electronic elements in the electronic device, to achieve immediate power saving. Thus, when the power control modes are the light power supply and the sleep power supply, the electronic elements are detected continuously and enter corresponding next power control modes if necessary, until the electronic device enters power supply in the turn-off power supply.

Besides, the power control mode is loaded with the power supply data that are supplied to the electronic elements in advance to regulate the power of the electronic elements based on the power supply data. In other words, each of the power control modes is loaded with power supply data that are supplied to the different electronic elements. In step S203, the power of the corresponding electronic elements are regulated based on the power supply data.

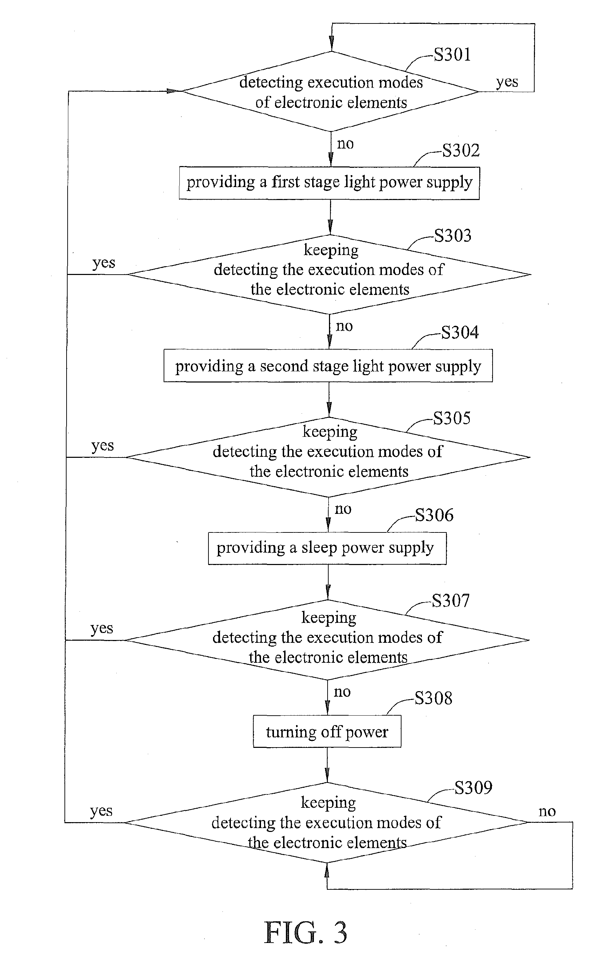

To further understand content of power regulation executed by the power control modes, the following explains actions under different power control modes referred to content in FIG 1 and FIG. 2. FIG. 3 is an operational flow chart illustrating a power control mode of a power management system of an embodiment according to the present invention. In step S301, execution modes of the electronic elements are detected. When the electronic element in the electronic device is un-used, the method proceeds to step S302, or step S301 is iterated to continuously detect the execution modes of the electronic elements. As described previously, the light power supply can be divided into a first stage power supply and a second stage power supply and regulates different electronic elements respectively.

In step S302, the electronic element is under un-use maybe because the user suspends operation. Thus, the first stage power supply would not substantially power off the electronic element. For example, in the first stage power supply the power of a backlight module or a monitor would be turned off, reducing the power of a peripheral elements, and decreasing the power or voltage of a certain peripheral element (for example, decreasing the voltage of an SD card from 3.2V to 2.7V or decreasing the voltage of a camera from 2.8V to 1.2V). The peripheral elements, though having a lower voltage, can still be executed immediately. Moreover, a waiting process of software in execution would be froze, such as process waiting for processing music or film so that the provided power can be reduces. Meanwhile, in first stage power supply of the light power supply the current consumption would be less than 300mA.

Then, in the first stage power supply of the light power supply, step S303 is entered to continuously detect the execution modes of the electronic elements. If the electronic elements are in operation, then the power control mode is released and step S301 is iterated. On the contrary, if the electronic elements of the electronic device are continuously under un-use, then step S304 is entered to enable the electronic device to enter the second stage power supply of the light power supply.

In step S304, the electronic elements of the electronic device are continuously under un-use in first stage power supply of the light power supply, so the electronic device enters the second stage power supply of the light power supply. For example, regulating power of an IC element in the second stage power supply such as muting audio, lowering clocking of CPU or enabling Wi-Fi to enter a standby mode enables an IC controller of the IC element to enter a power-saving mode. In second stage power supply of the light power supply, the current consumption would be about 40∼80mA.

Step S305 is entered during the second stage power supply of the light power supply. That is, the execution modes of the electronic elements are detected continuously, if the electronic elements of the electronic device are in operation, the power control mode is released, the overall power supply is provided, and step S301 is iterated. On the contrary, if the electronic elements of the electronic device are continuously under un-use, then step S306 is entered to enable the electronic device to enter a sleep power supply.

In step S306, the electronic elements of the electronic device are still under un-use in the second stage power supply of the light power supply, so the electronic device enters the sleep power supply such as enabling the IC element to be turned off under the sleep power supply or turning off an IC power source of an audio amplifier, lowering clocking of all IC elements whose clocking that can be reduced. In an embodiment, the IC element can be a CPU, a power management IC (PMIC) and an audio element, and the current consumption under the sleep power supply would be about 15mA.

Step S307 would be entered after entering the sleep power supply. That is, the execution modes of the electronic elements are detected continuously, and step S301 is iterated. On the contrary, if the electronic elements of the electronic device are continuously under un-use, during a day, for example, then step S308 is entered to enable the electronic device to enter a power control mode of power supply in turn-off power supply.

In step S309, when the electronic elements of the electronic device are un-used under the sleep power supply and certain time is elapsed, the power control mode is regulated to be the power supply in turn-off power supply. For example, the system of electronic device would be waked up before entering power supply in turn-off power supply, and then enters power supply in turn-off power supply. The current consumption under the power supply in turn-off power supply is reduced to 5mA. On the other hand, the power supply in turn-off power supply remains in most basic restarting mechanism, meanwhile almost turning off power of all electronic elements. Thus, restarting consumes more time.

In step S309, the execution modes of the electronic elements are detected continuously, if the electronic elements of the electronic device are continuously under un-use, then enabling the electronic device to be kept under a power supply in turn-off power supply, otherwise restarting system keeping execution of electronic device, repeating step S301.

From the above, it can be known that the power control modes provided in the present invention sequentially includes a light power supply having a first stage power supply and a second stage power supply, a sleep power supply and a turn-off power supply, immediately regulating power by detecting the execution modes of the electronic elements and reducing or turning off power of the related electronic elements under different power control mode to achieve immediate power saving.

To sum up, the power management system and power management method according to the present invention gradually enter a light power supply, a sleep power supply and a turn-off power supply under un-use of the electronic elements by continuously detecting the execution modes of the electronic elements and reduces or turns off the power of related IC elements and/or peripheral elements under each mode to achieve immediate and efficient power saving, avoiding disadvantage of power saving only in specific condition or time in prior art, enabling portable electronic device such as tablet computer, smart phone to achieve best utilization.

The foregoing descriptions of the detailed embodiments are only illustrated to disclose the features and functions of the present invention and not restrictive of the scope of the present invention. It should be understood to those in the art that all modifications and variations according to the spirit and principle in the disclosure of the present invention should fall within the scope of the appended claims.

## Claims

1. A power management system applicable to regulating a power supplied to an electronic device having a plurality of electronic elements, the power management system comprising:
a detection module for detecting execution modes of the electronic elements so as to generate detection data;
an analysis module for analyzing the detection data to generate process commands corresponding to the execution modes of the electronic elements; and
a process module for gradually regulating the power by a power control mode of the electronic device according to the process commands, the power control mode including a light power supply, a sleep power supply and a turn-off power supply.

2. The power management system of claim 1, wherein the power control mode is loaded with power supply data that are supplied to the electronic elements, and the process module regulates the power of the electronic elements depending on the power supply data.

3. The power management system of claim 2, wherein the electronic elements include a monitor, an IC element and a peripheral element.

4. The power management system of claim 3, wherein the light power supply includes a first stage power supply and a second stage power supply, and the first stage power supply turns off power of the monitor, reduces power of the peripheral element, and freezes a waiting process in the electronic device that executes software.

5. The power management system of claim 4, wherein the second stage power supply regulates power of the IC element.

6. The power management system of claim 3, wherein the sleep power supply reduces clocking of the IC element or turns off power of the IC element.

7. The power management system of claim 1, wherein the power control mode regulates to the sleep power supply and then to the turn-off power supply after a predetermined time.

8. A power management method applicable to regulating a power supplied to an electronic device including a plurality of electronic elements, the power management method comprising the following steps of:
(1) keeping detecting execution modes of the electronic elements;
(2) analyzing the execution modes and generating corresponding process commands; and
(3) executing the process commands to gradually regulate a power control mode of the electronic device, the power control mode including a light power supply, a sleep power supply and a turn-off power supply.

9. The power management method of claim 8, wherein the power control mode is loaded with power supply data that are supplied to the electronic elements, and regulates power of the electronic elements depending on the power supply data.

10. The power management method of claim 8, wherein the electronic elements include an IC element and a peripheral element.
